# EUROPEAN PATENT SPECIFICATION

(11) **EP 0 787 613 B1**
(45) Date of publication and mention of the grant of the patent: **05.09.2001**
(21) Application number: 96115650.2
(22) Date of filing: 30.09.1996
(51) Int. Cl.: B60K 13/02

(54) **Air intake device for internal combustion engine**
Luftansaugvorrichtung für Brennkraftmaschine
Dispositif d'admission d'air pour moteur à combustion interne

(30) Priority: 31.01.1996 JP 3738296
(43) Date of publication of application: 06.08.1997
(73) Proprietor: SUZUKI MOTOR CORPORATION, Hamamatsu-shi, Shizuoka-ken (JP)
(72) Inventor: Teshi, Masaki, c/o Suzuki Motor Corp., Hamamatsu-shi, Shizuoka-ken (JP); Saitoh, Hiroshi, c/o Suzuki Motor Corp., Hamamatsu-shi, Shizuoka-ken (JP); Hirose, Koji, Higashi-Yamanashigun,Yamanashi-ken409-13 (JP); Hoshino, Junichi, c/o Suzuki Motor Corp., Hamamatsu-shi, Shizuoka-ken (JP); Horie, Nobuyoshi, c/o Suzuki Motor Corp., Hamamatsu-shi, Shizuoka-ken (JP)
(74) Representative: Klingseisen, Franz, Dipl.-Ing.

(56) References cited:
- EP-A- 0 352 760
- EP-A- 0 578 546
- CH-A- 282 919

## Description

The present invention relates to an air intake device according to the preamble of claim 1.

EP 352 760 Al discloses such an air intake device for an internal combustion engine mounted in a horizontal position in the engine room of a vehicle. According to this prior art document the transmission is mounted on the left side of the engine room, but the engine extends into the central area of the engine room. For this reason the space for arranging an air cleaner is limited to the transmission side of the engine room. The throttle body is disposed on the backward side of the engine. Therefore, they discharge port of the air cleaner is disposed in the air cleaner against the direction of movement of the vehicle as any other arrangement would reduce the volume and would demand a longer outlet pipe between the discharge port and the throttle body due to the limited space for the air cleaner in the construction according to EP 352 760 A1.

The present invention particularly relates to an air intake device which enables reduction of works in an assembly line, reduction of cost, and increase of a volume of the air cleaner, and in addition which can respond, when a running mode of a vehicle is set to a natural air intake mode or a turbo mode, to -the both types of running mode with a new air exhaust port of the air cleaner provided in the internal combustion engine side.

### [Prior Art]

AN internal combustion engine as a driving source is mounted in a vehicle. As a mounting/driving system of an internal combustion engine, there are the FF (front engine/front drive) system, FR (front engine/rear drive system), and mid-ship system or the like.

An internal combustion engine mounted according to the FF (front engine/front drive) system is mounted in a horizontal posture in an engine room of a vehicle to facilitate transmission of a driving force from the internal combustion engine.

As an example of the air intake device for an internal combustion engine, there is the one disclosed in Japanese Patent Laid-Open Publication No.13254/1989. In the engine for a vehicle disclosed in this publication, an air cleaner is located in an engine room near a side wall of the vehicle in one side against the direction in which the vehicle runs, and ribs for prevention of intrusion of water are provided on external side walls of air cleaners in both the front and rear sides of a sound absorption hole in the direction in which the vehicle runs.

### [Problems to be Solved by the Invention]

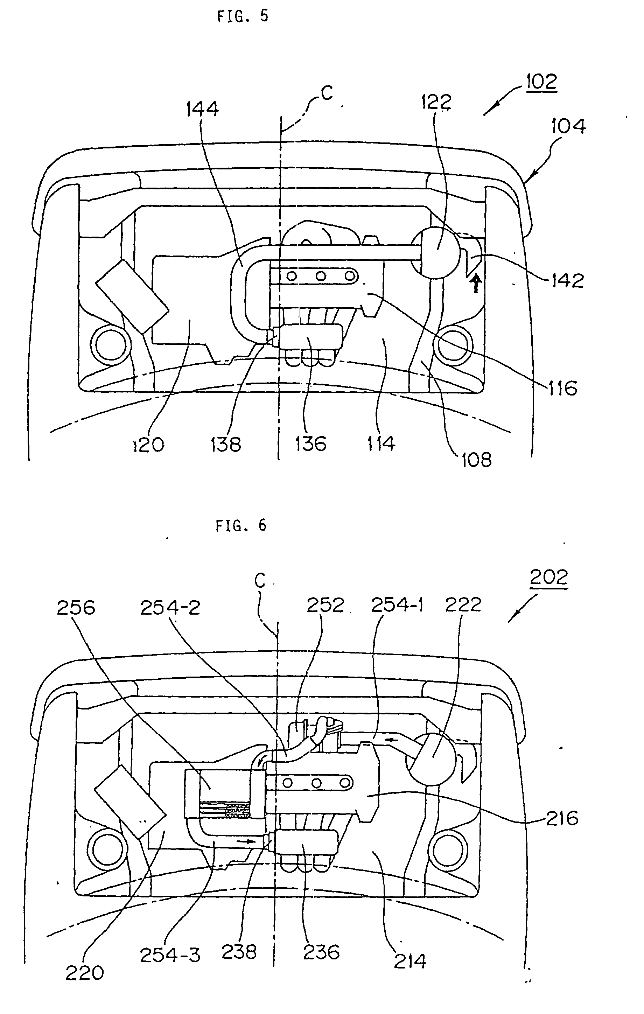

By the way, in the conventional type of an air intake device for an internal combustion engine, especially in that running in the natural air intake mode, as shown in Fig. 5, an internal combustion engine is mounted in its horizontal posture in the right side position against the center line C of a vehicle parallel to the direction in which the vehicle runs inside an engine room 114 of a vehicle 102, and a transmission 120 is mounted at a left side position against the center line C of the vehicle parallel to the direction in which the vehicle runs inside the engine room 114.

Also, when a throttle body 133 is attached to a surge tank 136 connected to an air intake system for an internal combustion engine 116, the throttle body 138 is attached at a position of a surge tank 136 oriented in the left side direction perpendicular to the direction in which the vehicle runs.

Furthermore in a car body 104 of the vehicle 102, an air cleaner 122 is provided in a right side side member 108, and an inlet pipe 142 for the air cleaner 122 is provided so that it is oriented to a direction in which the vehicles goes back, namely to a direction contrary to that in which the vehicle moves forward.

And, when the air cleaner 122 and the throttle body 138 are connected to each other with an outlet pipe 144, an edge of the outlet pipe 144 is connected to the air cleaner 122, the outlet pipe 144 is provided in the leftward direction perpendicular to the direction in which the vehicle moves forward from a position where the air cleaner is attached so that the outlet pipe passes above the internal combustion engine 116, and also the outlet pipe 144 is bent above the transmission 120 to the rightward direction perpendicular to the direction in which the vehicle moves forward and connected to the throttle body 138.

As a result, a length of the outlet pipe connecting the air cleaner to the throttle body becomes large, which is disadvantageous for layout.

Also in a car body of the vehicle, because an air cleaner is provided on the right side side member, it is necessary to mount the air cleaner in a step different from a step for mounting an internal combustion engine or a transmission, which makes a number of manufacturing steps larger, and in addition an air cleaner is not positioned at a substantially central position of an engine room with the largest height of the bonnet hood, which makes it impossible to increase a volume of the air cleaner, and for this reasons the configuration is disadvantageous in practical use and vibration of an internal combustion is disadvantageously delivered through the air cleaner to the car body.

Also as shown in Fig. 6, in a case where a turbo charger 252 is attached to an internal combustion engine 216 and the engine is run in the turbo mode, like in a case of an engine run in the natural air intake mode, the internal combustion engine 216 and transmission 220 are mounted in the engine room 214 of the vehicle 202, and also an air cleaner 222 and a surge tank 236 are attached thereto.

Then, a turbo charger 252 is attached to the internal combustion engine 216 in the side facing to a direction in which the vehicle moves forward, the turbo charger 252 and the air cleaner 222 are connected to each other with a first outlet pipe 254-1, the turbo charger 252 and the inter-cooler 256 are connected to each other with a second outlet pipe 254-2, and also the inter-cooler 256 and a throttle body 238 of the surge tank 236 are connected with a third outlet pipe 254-3.

In this step, the inter-cooler 256 is provided on a top surface of the transmission 220.

As a result, the inter-cooler hides a top surface of the transmission, and it is required to connected cables or the like on the transmission and then mount the inter-cooler after an internal combustion engine or a transmission is mounted on the car body, which makes a number of manufacturing steps larger and is disadvantageous in practical use.

Also it is required to mount an air cleaner by attaching it as a single body to the car body in a step different from that for mounting an internal combustion engine or a transmission, which required heavy work load and a large number of manufacturing steps and is disadvantageous in practical use.

These problems are solved by the features recited in the characterizing part of claim 1.

### Means for Solving the Problems

To overcome the problems as described above, according to an aspect of the present invention provides an air intake device for an internal combustion engine based on a cross flow system and mounted in its horizontal posture inside an engine room of a vehicle with a multi-point injection system employed therein, and is characterized in that the internal combustion engine is positioned inside an engine room located in the right side from a center line of the vehicle parallel to the direction in which the vehicle moves forward, a transmission is provided inside an engine room in the left side therefrom, an air cleaner is attached to the internal combustion engine from the side of this transmission, and this air cleaner is positioned at a position inner from a right edge of the internal combustion engine as well as from a left edge of the transmission.

### [Mode for Carrying out the Present Invention]

With the inventive steps as described above, when an internal combustion engine is mounted on a car body of a vehicle, at first components relating to an air intake system such as an air cleaner, a surge tank, or a throttle body are attached to the internal combustion engine or a transmission, and, after the work for attaching the components are mounted on a car body, which makes it possible to reduce a number of works in an assembly line, to reduce the production cost, and to make large a volume of an air cleaner, and in addition a new air discharge port of the air cleaner is provided at a position facing the internal combustion engine, so that the vehicle can run in both the natural air intake more and the turbo mode.

### [Embodiments]

Detailed description is made for embodiments of the present invention with reference to the related drawings.

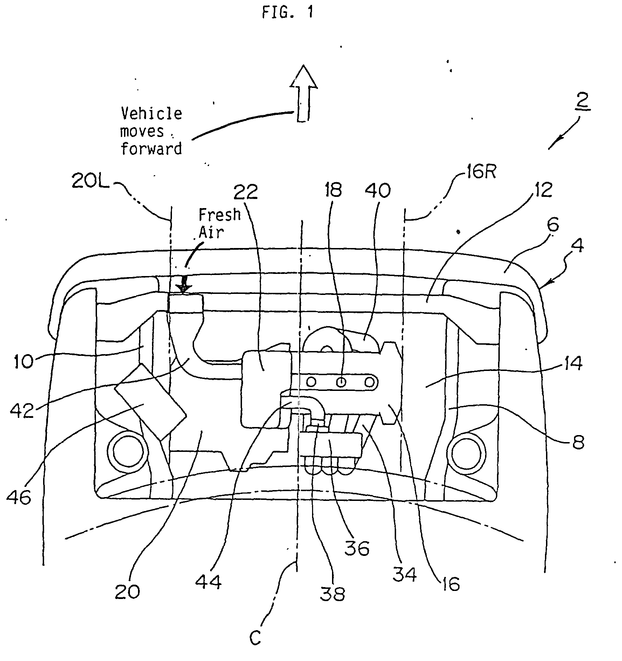

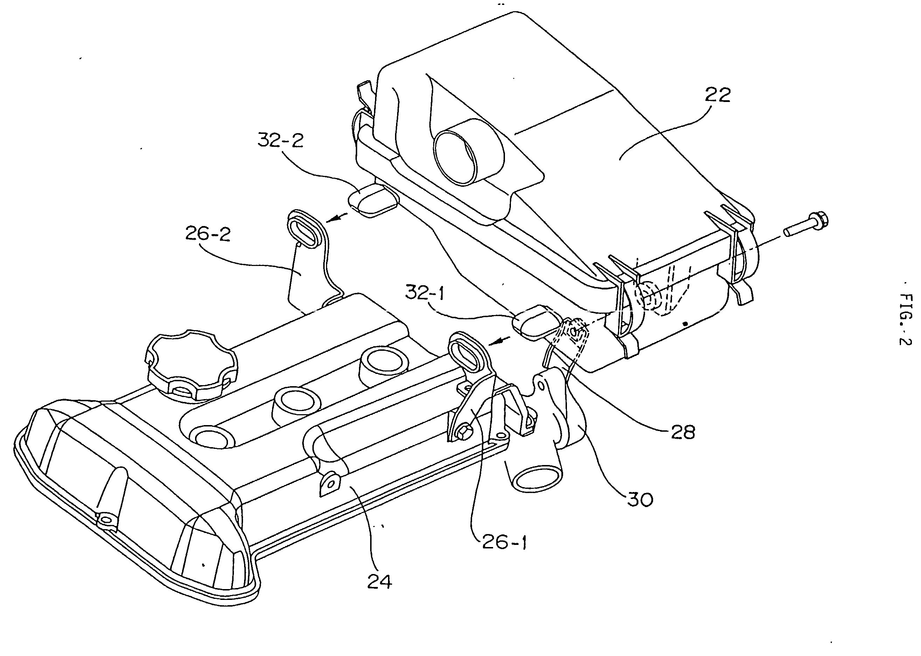

Fig.1 and Fig. 2 show a first embodiment of the present invention respectively. In Fig. 1, designated at the reference numeral 2 is a vehicle, at 4 a car body of the vehicle 2, at 6 a bumper in the front side, at 8 a right side side member, at 10 a left side side member, at 12 a cross member, at 14 an engine room formed in the front side of the vehicle 2, and at 16 an internal combustion engine running in the natural air intake mode provided inside the engine room 14.

This internal combustion engine 16 is mounted in its horizontal posture according to a cross flow system inside the engine room 14 of the vehicle 2 with a multi-point injection 18 employed therein.

And, when mounting the internal combustion engine 16 inside the engine room 14 of the vehicle 2, as shown in Fig. 1, the internal combustion engine 16 is located inside the engine room 14 in the right side from the center line of the vehicle parallel to the direction in which the vehicle moves forward, a transmission 20 is positioned inside the engine room 14 located in the left side therefrom, an air cleaner 22 is attached from the side of this transmission 20 to the internal combustion engine 16, and the air cleaner 22 is positioned at a substantially central position of the engine room 14 located at an inner position from a right edge of the internal combustion engine 16 as well as from a left edge of the transmission 20.

In detail, the internal combustion engine 16 is located inside the engine room 14 at a position in the left side from the center line C of the vehicle parallel to the direction in which the vehicle moves forward, the transmission 20 is positioned at a position in the left side section of the engine room 14, and when the air cleaner is attached to the internal combustion engine 16, the air cleaner 22 is attached from the side of the transmission 20 to the internal combustion engine, the air cleaner 22 is located at an inner position from the right edge 16R of the internal combustion engine 16 as well as from the left edge 20L of the transmission 20, namely at a substantially central position of the engine room 14.

The air cleaner 22 is, as shown in Fig. 2, connected via first and second brackets 26-1 and 26-2 provided on the head cover 24 of the internal combustion engine 16, and also via a a third bracket 28 to a thermo case 30 provided in a cylinder head not shown herein, and the air cleaner is attached only to the internal combustion engine 16.

Namely, as shown in Fig. 2, the first and second brackets 26-1, 26-2 are fixed to the head cover 24, and the air cleaner 22 is horizontally moved and fixed by engaging first and second projections 32-1, 32-2 projecting form a side surface of the air cleaner 22 with the first and second brackets 26-1, 26-2.

The third bracket 28 connected the air cleaner 22 to the thermo case 30 provided on a cylinder hear not shown herein.

Furthermore as shown in Fig. 1, when attaching a throttle body 38 to a surge tank 36 communicating to an air intake manifold 34 of the internal combustion engine 16, a throttle body 38 is attached to the side of the surge tank 36 in the direction in which the vehicle moves forward.

It should be noted that, in Fig. 1, designated at the the reference numeral 40 is an air discharge manifold connected to the internal combustion engine 16, at 42 an inlet pipe opened in the upstream side to the cross member 12 for introducing fresh air into the air cleaner, at 44 an outlet pipe connecting the air cleaner 22 to the throttle body 38 of the surge tank 36, at 46 a battery provided on the left side side member 10.

Next description is made for effects.

When mounting the internal combustion engine 16 onto the car body 4 of the vehicle 2, at first components relating to an air intake system such as the air cleaner 22, surge tank 36, and throttle body 38 are attached to the internal combustion engine 16 or the transmission 20, and then the engine 6 is mounted onto the car body 4.

When the internal combustion engine 16 is driven, vibration of the internal combustion engine 16 is delivered to the transmission 20 or to the air cleaner 22. However,as the air cleaner is attached only to the internal combustion engine 16, the vibration is not delivered from the air cleaner to a car body of the vehicle.

With this feature, a top surface of the transmission 20 is not hid by any component, and the internal combustion engine 16 or the transmission 20 can be mounted on the car body after components related to an air intake system have been attached thereto, which makes it possible to reduce work load in the assembly line, to reduce the production cost, and also to improve the product quality.

Also as the air cleaner 22 is positioned at a substantially central position of the engine room where the bonnet hood height is the largest, it is possible to increase a volume of the air cleaner 22, which is advantageous in practical use.

Furthermore, by attaching the air cleaner 22 from the side of the transmission 20 to the internal combustion engine, a new air discharge port of the air cleaner can be positioned in the side of the internal combustion engine 16, so that, when the vehicle is run in the natural air intake mode or in the turbo mode, the air cleaner can respond to both of the modes.

Furthermore, the air cleaner 22 is connected via the first brackets 26-1, 26-2 each provided on the head cover 24 of the internal combustion engine 16 thereto, and via the third bracket 28 to the thermo case 30 provided on a cylinder head now shown herein, and the air cleaner 22 is attached only to the internal combustion engine 16, so that increase of manufacturing steps like that in the conventional technology can be evaded, and also transmission of vibration of the internal combustion engine 16 to the car body 4 can be prevented without fail.

Also when attaching the throttle body 38 to he surge tank 36 communicating to an air intake system of the internal combustion engine 16, by attaching the throttle body 38 to a side of the surge tank facing to a direction in which the vehicle moves forward, it becomes possible to mount all components relating to the air intake system excluding the inlet pipe 42 of the air cleaner 22, and in addition the throttle body 38 is not hid by the air cleaner 22, and for the reasons described above any trouble occurs in such works as adjustment of axle cable.

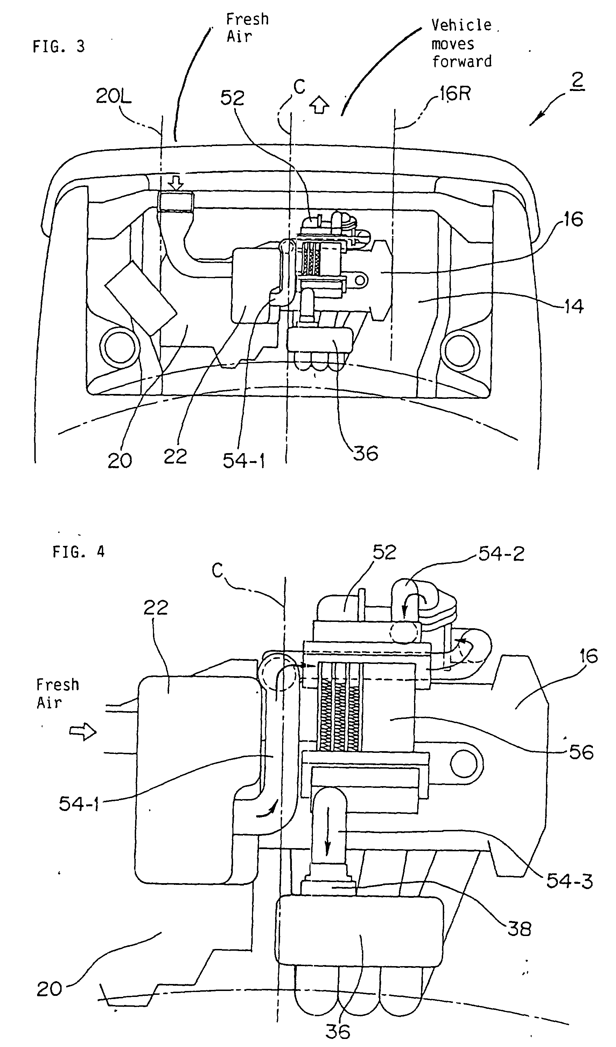

Fig. 3 and Fig. 4 show a second embodiment of the present invention. In this second embodiment, the same reference numerals are assigned to sections each executing the same function as that in the first embodiment.

This second embodiment features that a turbo charger is attached to the internal combustion engine 16 for running in the turbo mode.

Namely as shown in Fig. 3, when mounting the internal combustion engine 16 in its horizontal posture in the engine room 14 of the vehicle 2, the internal combustion engine 16 is positioned inside the engine room 14 in the right side from the center line C of the vehicle parallel to the direction in which the vehicle moves forward and at the same time the transmission 20 is positioned inside the engine room 14 in the left side from the center line C, the air cleaner is attached from the side of the transmission 20 to the internal combustion engine 16, and this air cleaner 22 is positioned at a substantially central position of the engine room at a position inner from the right edge 16R of the internal combustion engine 16 as well as from the left edge 20L of the transmission 20.

The method of attaching the air cleaner 22 is the same as that described above, and description thereof is omitted herein.

And as shown in Fig. 3 and Fig. 4, a turbo charger 52 is mounted in the side to the internal combustion engine 16 to which the vehicle moves, the turbo, charger 52 and the air cleaner 22 are connected to each other with a first outlet pipe 54-1, the turbo charger 52 and the inter-cooler 56 are connected to each other with a second outlet pipe 54-2, the inter-cooler 56 and the throttle body 38 of the surge tank 36 are connected to each other with a third outlet pipe 54-3, and the first outlet pipe 54-1 is positioned so that it extends on the center line C of the vehicle.

When providing the turbo charger 52, inter-cooler 56, and throttle body 38 in the internal combustion engine, the components are arrays along a substantially straight line from the front side of a vehicle to the rear side thereof.

Namely, the inter-cooler 56 which cools down the supercharging temperature of the turbo charger 52 is located above the internal combustion engine 16 and between the turbo charger 52 and the throttle body 38.

Because of this construction, by providing the first outlet pipe 54-1 so that it extends on the center line C of a vehicle, it is possible to freely select a diameter of a pipe according to a form of the bonnet hood (with large allowance), which is practically advantageous.

Also by providing the turbo charger 52, inter-cooler 56, and throttle body 38 along a substantially straight line from the front side of a vehicle to the rear side of the vehicle, length of pipes or the like connecting the auxiliary devices to each other can be made smaller, which in turn makes it possible to reduce a number of required brackets and also to reduce interference with other components.

Furthermore by preventing an air intake system from becoming excessively long, an air intake loss can be reduced, which is effective

### [Effects of the Invention]

As described in detail above, the present invention provides an air intake system for an internal combustion engine, which is mounted in its horizontal posture inside an engine room of a vehicle and is based on a cross flow system, with a multi-point injection system employed therein, and in this invention, the internal combustion engine is positioned inside an engine room located in the right side from a center line of the vehicle parallel to the direction in which the vehicle moves forward and at the same time a transmission is positioned inside an engine room located in the left side from the center line, an air cleaner is attached from the side of the transmission to the internal combustion engine and the air cleaner is located at a substantially central position inner from a right edge of the internal combustion engine as well as from a left edge of the transmission, so that a top surface of the transmission is not hid by other components, and in addition components relating to the air intake system can be mounted after they are attached to the internal combustion engine or the transmission, which makes it possible to reduce work load in an assembly line, to reduce the production cost, and to improve the product quality. Also as the air cleaner is provided at a substantially central position of the engine room where a height of the bonnet hood is largest, it is possible to increase a volume of an air cleaner, which is practically useful. Furthermore by attaching an air cleaner from a side of the transmission to the internal combustion engine, a new air discharge port of the air cleaner can be located at a position opposite to the internal combustion engine, which makes it possible, when the vehicle is run in the natural air intake mode or the turbo mode, for the air intake system to respond to both the two modes.

### [Brief Description of the Invention]

### [Fig. 1]

Fig. 1 is a general flat view showing an engine room of a vehicle according to a first embodiment of the present invention.

### [Fig. 2]

Fig. 2 is a perspective view showing the state where an air cleaner has been assembled to a head cover of an internal combustion engine.

### [Fig. 3]

Fig. 3 is a general flat view showing an engine room of a vehicle according to a second embodiment of the present invention.

### [Fig. 4]

Fig. 4 is a general enlarged flat view showing an internal combustion engine.

### [Fig. 5]

Fig. 5 is a general flat view showing an engine room of a vehicle according to a first example of the conventional technology.

### [Fig. 6]

Fig. 6 is a general flat view showing an engine room of a vehicle according to a second example of the conventional technology.

### [Description of Signs]

- 2:: Vehicle
- 4:: Car body
- 6:: Bumper in the front side
- 8:: Side member in the right side
- 10:: Side member in the left side
- 12:: Cross member
- 14:: Engine room
- 16:: Internal combustion engine
- 18:: Multi-point injection
- C:: Center line.
- 20:: Transmission
- 22:: Air cleaner
- 24:: Head cover
- 26-1:: First bracket
- 26-2:: Second bracket
- 28:: Third bracket
- 30:: Thermo case
- 32-1:: First projection
- 32-2:: Second projection
- 34:: Air intake manifold
- 36:: Surge tank
- 38:: Throttle body
- 40:: Air discharge manifold
- 42:: Inlet pipe
- 44:: Outlet pipe
- 46:: Battery

## Claims

1. An air intake device for an internal combustion engine (16), based on a cross flow system and mounted in a horizontal position in a vehicle (2) crossed by a central line (C) in parallel to the forward direction of movement of the vehicle, a transmission (20) being located on the left side of the central line (C); wherein
the intake device comprises an air cleaner (22) attached to the internal combustion engine (16) at a side of the internal combustion engine facing the transmission (20), the air cleaner comprising an air discharge port,
**characterised in that**
said internal combustion engine (16) is located on the right side of the central line (C), said air cleaner (22) is positioned in the vicinity of the central line (C), and in that
said air discharge port is provided at a position facing the side of the internal combustion engine (16).

2. The air intake device for an internal combustion engine (16) according to Claim 1, said air cleaner (22) is connected via a first bracket (26-1) and a second bracket (26-2) each provided on a head cover (24) of the internal combustion engine to the internal combustion engine, and via a third bracket (28) to a thermo case (26) provided in a cylinder head.

3. The air intake device for an internal combustion engine (16) according to Claim 1; wherein said internal combustion engine has a throttle body (38) mounted in the side of a surge tank (36) in which the vehicle (2) proceeds when the throttle body (38) is attached to the surge tank (36).

4. An air intake device according to Claim 1; wherein said internal combustion engine (16) has a turbo charger (52) and an outlet pipe (54-1) of an air cleaner is provided so that it passes through a center line (6) of the vehicle (2).

5. An air intake device for an internal combustion engine (16) according to Claim 1; wherein said internal combustion engine (16) has a turbo charger (52) and wherein the turbo charger (52), an inter-cooler (56), and a throttle body (38) are provided substantially along a straight line in the front side to the rear side of the vehicle (2).

## Patentansprüche

1. Luftansaugvorrichtung für einen Verbrennungsmotor (16), die auf einem Kreuzstromsystem basiert und in einer horizontalen Position in einem Fahrzeug (2) angebracht ist, die durch eine Mittellinie (C), die parallel zur vorwärts gerichteten Bewegung des Fahrzeugs verläuft, gekreuzt wird, wobei ein Getriebe (20) an der linken Seite der Mittellinie (C) angeordnet ist; wobei
die Ansaugvorrichtung einen Luftfilter (22) umfasst, der an dem Verbrennungsmotor (16) an der Seite des Verbrennungsmotors befestigt ist, die dem Getriebe (20) zugewandt ist, wobei der Luftfilter einen Luftabgabeanschluss umfasst,
**dadurch gekennzeichnet**, dass
der Verbrennungsmotor (16) an der rechten Seite der Mittellinie (C) angeordnet ist, der Luftfilter (22) in der Nähe der Mittellinie (C) angeordnet ist und der Luftabgabeanschluss in einer Position vorgesehen ist, die der Seite des Verbrennungsmotors (16) zugewandt ist.

2. Luftansaugvorrichtung für einen Verbrennungsmotor (16) nach Anspruch 1, wobei der Luftfilter (22) über einen ersten Bügel (26-1) und einen zweiten Bügel (26-2), die je an einer Kopfabdeckung (24) des Verbrennungsmotors vorgesehen sind, mit dem Verbrennungsmotor und über einen dritten Bügel (28) mit einem Thermogehäuse (30) verbunden ist, der in einem Zylinderkopf vorgesehen ist.

3. Luftansaugvorrichtung für einen Verbrennungsmotor (16) nach Anspruch 1, wobei der Verbrennungsmotor einen Drosselkörper (38) besitzt, der auf der Seite eines Ausgleichbehälters (36) angebracht ist, in der sich in das Fahrzeug (2) fortbewegt, wenn der Drosselkörper (30) an dem Ausgleichbehälter (36) befestigt ist.

4. Luftansaugvorrichtung für einen Verbrennungsmotor (16) nach Anspruch 1, wobei der Verbrennungsmotor (16) einen Turbolader (52) besitzt und eine Auslassleitung (54-1) eines Luftfilters so vorgesehen ist, dass sie durch die Mittellinie (C) des Fahrzeugs (2) hindurch tritt.

5. Luftansaugvorrichtung für einen Verbrennungsmotor (16) nach Anspruch 1, wobei der Verbrennungsmotor (16) einen Turbolader (52) besitzt und wobei der Turbolader (52), ein Ladeluftkühler (56) und ein Drosselkörper (38) im Wesentlichen entlang einer geradlinigen Linie von der Vorderseite zu der Rückseite des Fahrzeugs (2) hin vorgesehen sind.

## Revendications

1. Dispositif d'admission d'air pour un moteur à combustion interne (16), basé sur un système d'écoulement transversal et monté dans une position horizontale dans un véhicule (2), qui est traversé par une droite centrale (C) parallèle au mouvement d'avance du véhicule, une transmission (20) étant située sur le côté gauche de la droite centrale (C); dans lequel le dispositif d'admission comprend un filtre à air (22) fixé au moteur à combustion interne (16) sur un côté du moteur à combustion interne tourné vers la transmission (20), le filtre à air comprenant un orifice d'évacuation d'air,
**caractérisé en ce que**
ledit moteur à combustion interne (16) est situé sur le côté droit de la droite centrale (C), ledit filtre à air (22) est positionné au voisinage de la droite centrale (C) et en ce que ledit orifice d'évacuation d'air est prévu dans une position située dans une position dans laquelle il fait face au côté du moteur à combustion interne (16).

2. Dispositif d'admission d'air pour un moteur à combustion interne (16) selon la revendication 1, dans lequel ledit filtre à air (22) est raccordé au moteur à combustion interne par l'intermédiaire d'une première console (26-1) et d'une seconde console (26-2) prévues chacune sur un capot supérieur (24), et à un boîtier thermique (26) prévu dans une culasse, par l'intermédiaire d'une troisième console (28).

3. Dispositif d'admission d'air pour un moteur à combustion interne (16) selon la revendication 1, dans lequel ledit moteur à combustion interne possède un corps d'étranglement (38) monté sur le côté d'un réservoir d'égalisation de pression (36) dans lequel le véhicule (2) fonctionne lorsque le corps d'étranglement (38) est fixé au réservoir d'égalisation de pression (36).

4. Dispositif d'admission d'air selon la revendication 1, dans lequel ledit moteur à combustion interne (16) possède un turbocompresseur (52), et une canalisation de sortie (54-1) d'un filtre à air est prévue de manière à s'étendre sur une droite centrale (6) du véhicule (2).

5. Dispositif d'admission d'air pour un moteur à combustion interne (16) selon la revendication 1, dans lequel ledit moteur à combustion interne (16) possède un turbocompresseur (52), et dans lequel le turbocompresseur (52), un radiateur intercalaire (56) et un corps d'étranglement (28) sont disposés essentiellement le long d'une droite sur le côté avant jusqu'au côté arrière du véhicule (2).
